# EUROPEAN PATENT APPLICATION

(11) **EP 1 770 921 A1**
(43) Date of publication of application: **04.04.2007**
(21) Application number: 06020088.8
(22) Date of filing: 26.09.2006
(51) Int. Cl.: H04L 12/56

(54) **Method and system to reduce delay and/or energy consumption in a multi-hop wireless system**

(30) Priority: 30.09.2005 US 240434
(71) Applicant: Robert Bosch GmbH, 70442 Stuttgart (DE)
(72) Inventor: Manjeshwar, Arati, AZ 85226 Chandler (US)
(74) Representative: Dreiss, Fuhlendorf, Steimle & Becker

(57) **Abstract**

A method and system to reduce delay and/or conserve energy in sending a message from a source node to a destination node of a multi-hop wireless network, includes broadcasting the message by the source node, receiving the message by at least one other node of the multi-hop wireless network, and providing an acknowledgment by the at least one other node if the at least one other node does not hear an acknowledgment from a node that is closer to the destination node.

## Description

### CROSS REFERENCE TO RELATED APPLICATIONS

This application is related to U.S. Patent Applications entitled "Method and System for Time Synchronization in Communication Networks"(Attorney Docket No. 11403/5501), "Method and System for Providing Acknowledged Broadcast and Multicast Communication" (Attorney Docket No. 11403/5502), "Method and System for Providing an Energy Efficient Exchange of Information in Wireless Networks" (Attorney Docket No. 11403/5503), "Method and System for Providing Interference Avoidance and Network Coexistence in Wireless Systems" (Attorney Docket No. 11403/5504), "Method and System for Reliable Data Transmission in Wireless Networks" (Attorney Docket No. 11403/5505), "Method and System to Reduce Delay and/or Energy Consumption in a Multi-Hop Wireless System" (Attorney Docket No. 11403/5506), "Method and System for Providing a Modified Time Division Multiple Access (TDMA) for Reduced Delay" (Attorney Docket No. 11403/5507), "Method and System for Providing Reliable Communication with Redundancy for Energy Constrained Wireless Systems" (Attorney Docket No. 11403/5508), "System and Method for a Communication Protocol for Wireless Sensor Systems Including Systems with High Priority Asynchronous Message and Low Priority Synchronous Message" (Attorney Docket No. 11403/5509), "Method and System to Reconfigure a Network to Improve Network Lifetime Using Most Reliable Communication Links" (Attorney Docket No. 11403/5510). The disclosure of each of the foregoing related applications is hereby incorporated by reference herein in its entirety.

### FIELD OF THE INVENTION

The present invention relates to a method and system to reduce delay and/or energy wastage in multi-hop wireless network communication systems.

### BACKGROUND

In a multi-hop wireless network communication system, a message from a source node that cannot be directly communicated to the destination node may be sent to an intermediate node which then forwards the message to the destination node, or alternatively, to another intermediate node.

In energy-constrained communication systems to conserve energy reliable links may be used to reduce delays and minimize energy wastage due to, for example, retries, lost communication, errors in communication, etc.

In certain wireless network communication systems, transmitting may be more "energy hungry" than receiving, that is, it may require more energy to transmit messages than to receive them.

### SUMMARY OF THE INVENTION

An exemplary embodiment and/or exemplary method of the present invention may combine certain features of broadcast media and redundant links to reduce the delay and energy consumption in a multi-hop wireless network communication system.

An exemplary embodiment and/or exemplary method of present invention may conserve energy by using reliable links to reduce delays and/or energy wastage due to, for example, retries, lost communication, errors in communication, etc.

An exemplary embodiment and/or exemplary method of present invention may use broadcast media and redundant links to reduce the delay and/or forwarding of messages, particularly high-priority messages.

An exemplary embodiment and/or exemplary method of the present invention is directed to a method of reducing delay and/or conserving energy to send a message from a source node to a destination node of a multi-hop wireless network, which includes broadcasting the message by the source node, receiving the message by at least one other node of the multi-hop wireless network, and providing an acknowledgment by the at least one other node if the at least one other node does not hear an acknowledgment from a node that is closer to the destination node.

Another exemplary embodiment and/or exemplary method of the present invention is directed to a method of reducing delay and/or conserving energy to send a message from a source node to a destination node of a multi-hop wireless network, which includes retransmitting the message by the source node if an acknowledgment is not received.

Still another exemplary embodiment and/or exemplary method of the present invention is directed to a method of reducing delay and/or conserving energy to send a message from a source node to a destination node of a multi-hop wireless network, which includes the at least one other node includes an intermediate node between the source node and the destination node.

Yet another exemplary embodiment and/or exemplary method of the present invention is directed to a method of reducing delay and/or conserving energy to send a message from a source node to a destination node of a multi-hop wireless network, in which the at least one other node includes the destination node.

Still another exemplary embodiment and/or exemplary method of the present invention is directed to a method of reducing delay and/or conserving energy to send a message from a source node to a destination node of a multi-hop wireless network, in which the at least one other node includes at least two intermediate nodes between the source node and the destination node.

Yet another exemplary embodiment and/or exemplary method of the present invention is directed to a method of reducing delay and/or conserving energy to send a message from a source node to a destination node of a multi-hop wireless network, in which the at least two intermediate nodes include a first intermediate node and a second intermediate node, the first intermediate node configured to forward the message from the source node to the second intermediate node and the second intermediate node configured to forward the message from the first intermediate node to the destination node.

Still another exemplary embodiment and/or exemplary method of the present invention is directed to a method of reducing delay and/or conserving energy to send a message from a source node to a destination node of a multi-hop wireless network, in which the first intermediate node only forwards the message to the second intermediate node if the first intermediate node does not provide an acknowledgement of the message.

Yet another exemplary embodiment and/or exemplary method of the present invention is directed to a method of reducing delay and/or conserving energy to send a message from a source node to a destination node of a multi-hop wireless network, which includes assigning a first time slot for communicating the broadcasted message and subsequent time slots for providing the acknowledgement.

Still another exemplary embodiment and/or exemplary method of the present invention is directed to a method of reducing delay and/or conserving energy to send a message from a source node to a destination node of a multi-hop wireless network, in which the subsequent times slots are assigned to the destination node and the at least one other node.

Yet another exemplary embodiment and/or exemplary method of the present invention is directed to a method of reducing delay and/or conserving energy to send a message from a source node to a destination node of a multi-hop wireless network, in which an order of the subsequent time slots corresponds to a hierarchical relationship of the destination node and the at least one other node with respect to other nodes of the multi-hop wireless network.

Still another exemplary embodiment and/or exemplary method of the present invention is directed to a method of reducing delay and/or conserving energy to send a message from a source node to a destination node of a multi-hop wireless network, which includes broadcasting a message by a source node, the message intended for a destination node, and forwarding the message by another node only if the another node does not hear an acknowledgment of the broadcasted message from one of the destination node and a node closer to the destination node.

Yet another exemplary embodiment and/or exemplary method of the present invention is directed to a method of reducing delay and/or conserving energy to send a message from a source node to a destination node of a multi-hop wireless network, which includes providing an acknowledgment of the broadcasted message by one of at the destination node and at an intermediate node between the destination node and the source node.

Still another exemplary embodiment and/or exemplary method of the present invention is directed to a method of reducing delay and/or conserving energy to send a message from a source node to a destination node of a multi-hop wireless network, in which the acknowledgement is provided in a time slot assigned to one of the destination node and an intermediate node between the destination node and the source node.

Yet another exemplary embodiment and/or exemplary method of the present invention is directed to a method of reducing delay and/or conserving energy to send a message from a source node to a destination node of a multi-hop wireless network, In which the time slot is arranged according to a hierarchical relationship of the one of the destination node and the intermediate node with respect to other nodes in the multi-hop wireless network.

An exemplary and/or exemplary method of the present invention is directed to a method of communication between nodes in a wireless network, which includes arranging the nodes of the wireless network in a hierarchical manner which corresponds to a primary responsibility of how messages should be forwarded from a source node to a destination node in the wireless network and which nodes should provide acknowledgements to the messages, assigning time slots to the nodes based on the hierarchical relationship, and configuring intermediate nodes to participate directly in forwarding the messages and providing the acknowledgements.

Another exemplary and/or exemplary method of the present invention is directed to a method of communication between nodes in a wireless network, which includes configuring nodes that are relatively closer to the destination node to participate directly in forwarding the messages and providing the acknowledgements.

Yet another exemplary and/or exemplary method of the present invention is directed to a method of communication between nodes in a wireless network, in which the nodes that are relatively closer the destination node participate if a node having primary responsibility fails to one of forward and acknowledge a message.

Still another exemplary and/or exemplary method of the present invention is directed to a method of communication between nodes in a wireless network, which includes configuring the destination node to participate directly in forwarding the messages and providing the acknowledgements.

### BRIEF DESCRIPTION OF THE DRAWINGS

Figure 1 shows an exemplary multi-hop wireless network, which includes a four network nodes and a base station arranged in a hierarchical manner with respect to the forwarding of messages.
Figure 2 shows the exemplary multi-hop wireless network of Figure 1, in which intermediate nodes of a communication path between the source node and the destination node may participate directly with the source node to reduce delay and/or energy consumption of the exemplary multi-hop wireless network.
Figure 3 shows a partial view of the exemplary multi-hop wireless network of Figure 2 and an associated time-slotted broad sequence of messages.
Figure 4 shows an exemplary multi-hop wireless network and associated time-slotted broadcast sequence of messages, in which not only intermediate nodes of a communication path participate directly with the source node to reduce delay or energy consumption, but any other node closer to the destination from the source node may also participate.
Figure 5 shows an exemplary multi-hop wireless network and associated time-slotted broadcast sequence of messages, in which the base station is configured to acknowledge directly a broadcast message sent by a non-intermediate source node.
Figure 6 shows an exemplary method to reduce delay and/or conserve energy when sending a message from a source node to a destination node of a multi-hop wireless network.

### DETAILED DESCRIPTION

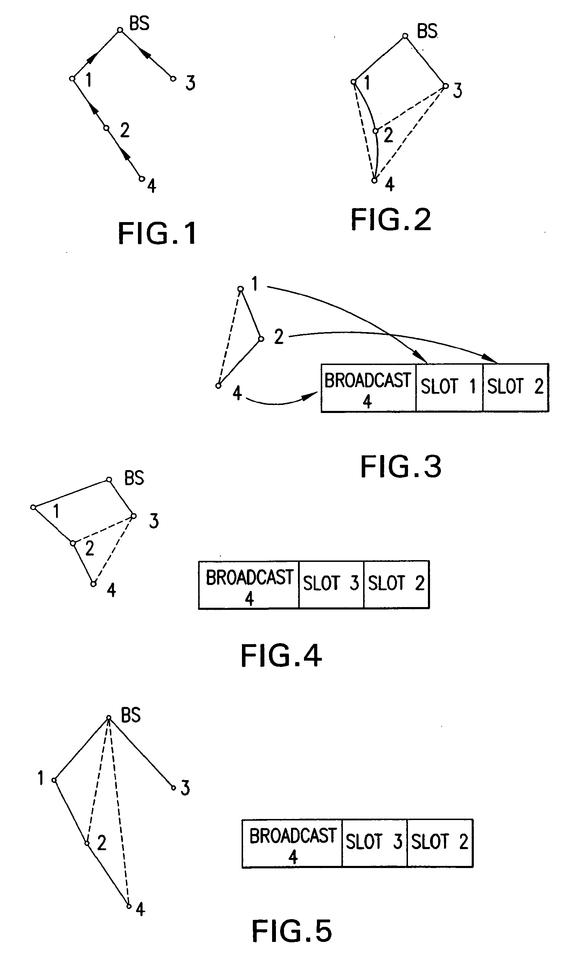

Figure 1 shows an exemplary multi-hop wireless network, which includes a first node 1, a second node 2, a third node 3, a fourth node 4, and a base station BS arranged in a hierarchical manner with respect to the forwarding of messages. In particular, in one direction the first node 1 is configured to forward messages to the base station BS, the second node 2 is configured to forward messages to the first node 1, the third node 3 is configured to forward messages to the base station BS, and the fourth node 4 is configured to forward messages to the second node 2. Likewise, in the opposite direction, the base station BS is configured to forward messages to the first node 1 and the third node 3, the first node 1 is configured to forward messages to the second node 2, which is configured to forward messages to the fourth node 4.

In this regard, a node of the exemplary multi-hop wireless network may be configured to forward messages based on link connectivity status indicators, including, for example, the signal strength, packet success rate, or combination thereof, and/or on geographic placement of the node with respect to other nodes and/or the base station BS. In this instance, for example, nodes that are closer to the base station BS are configured to forward messages to/from the nodes that are further away from the base station BS. Alternatively, a node of the exemplary multi-hop wireless network may be configured to forward messages based on the certain adverse environmental conditions, which affect the reliability of the links of the exemplary multi-hop wireless network.

With such a configuration, for example, the fourth node 4 may want to send a message to the base station BS but since the fourth node 4 is not configured to communicate directly with the base station BS, the message is first sent to the second node 2, which forwards the message to the first node 1, which forwards the message to the base station BS. In this regard, although the fourth node 4 may indeed have a direct link to the first node 1, if this link is not reliable enough, it may be more efficient (e.g., in terms of energy and delay) to relay the message via the second node 2 and the first node 2, which together may have a more reliable link to the base station BS.

Figure 2 shows the exemplary multi-hop wireless network of Figure 1, in which intermediate nodes of a communication path between a source node and destination node may participate directly with the source node to reduce the delay and/or energy consumption of the exemplary multi-hop wireless network. In this regard, it is assumed that the source node can communicate to more than one node, and the intermediate nodes that serve as "bridges" to reach the destination node can hear the other hop (this assumption may automatically follow from the topology).

For example, the fourth node 4 may be configured to forward a message to the second node 2, which forwards the message to the first node 1. However, if the fourth node 4 can communicate directly with the first node 1, to reduce relay and energy consumption, the fourth node 4 may broadcast the message to both the first node 1 and the second node 2, and wait for an acknowledgment from either the first node 1 or the second node 2. In this regard, a first time slot 1 may be allocated for the first node 1 to send an acknowledgement (ack) to the fourth node 4, and a second time slot 2 may be allocated for the second node 2 to send an acknowledgement (ack) to the fourth node 4, as shown in Figure 3.

If the second node 2 and the first node 1 can communicate to each other, any message sent by the first node 1 may be heard by the second node 2. Therefore, according to an exemplary embodiment and/or exemplary method of the present invention, the fourth node 4 broadcasts the message. If the first node 1 detects the broadcasted message (error-free) the first node 1 provides an acknowledgement in time slot 1. If the second node 2 detects the acknowledgment from the first node 1, the second node 2 does not provide an acknowledgement to the fourth node 4. If the fourth node 4 detects the acknowledgment from the first node 1, the fourth node 4 does not retry to send the message. In this regard, the second node 2 is not required to forward the message. Hence, transmit energy at the second node 2 is saved. Also, since the second node 2 does not forward the message, one hop may be skipped, thereby reducing the delay in sending the message to the destination. Moreover, if the link or intermediate node to the second node 2 should fail, or if the second node 2 itself fails, the message may still reach the destination due to an increase in redundancy. However, if the first node 1 does not provide an acknowledgement, the second node 2 provides an acknowledgement and forwards the message to the first node 1, so therefore receive energy may be spent at the first node 1 in an attempt to receive certain messages and a slight increase in delay may occur to accommodate the additional time slot 1. Nonetheless, depending on link quality between the first node 1 and the second node 2, greater savings in time and energy may be achieved on average.

Figure 4 shows an exemplary multi-hop wireless network and associated time-slotted broadcast sequence of messages, in which not only intermediate nodes within the communication path between the source node and the destination can participate to reduce delay, but any other node closer or within communication reach to the destination node may also participate. For example, the fourth node 4 is configured to forward a message to the second node 2, which is configured to forward the message to the first node 1, which is configured to forward the message to the base station BS. However, if the fourth node 4 can communicate directly with the third node 3, which is configured to forward the message to the base station BS, to reduce delay and energy consumption, the fourth node 4 may broadcast the message to both the second node 2 and the third node 3, and wait for an acknowledgement from either the second node 2 or the third node 3. In this regard, a time slot 2 may be allocated to the second node 2 to send an acknowledgement (ack) to the fourth node 4 and a time slot 3 may be allocated to the third node 3 to send an acknowledgement (ack) to the fourth node 4. Therefore, according to an exemplary embodiment of the present invention, the fourth node 4 broadcasts a message. If the third node 3 detects the broadcasted message (error-free) the third node 3 provides an acknowledgement in time slot 3 allocated for the third node 3. If the second node 2 detects the acknowledgement from the third node 3, the second node 2 does not provide an acknowledgment to the fourth node 4. If the fourth node 4 detects the acknowledgment from the third node 3, the fourth node 4 does not try to resend the message. In this regard, the second node 2 is not required to forward the message. Moreover, the first node 1 is also not required to forward the message. Hence, transmit energy at the second node 2 and the first node 1 is saved. Also, since the second node 2 does not forward the message one hop may be skipped, thereby reducing the delay in sending the message to the destination. Moreover, if the link to the second node 2 should fail, or even if the second node 2 should fail, the message may still reach the destination due to an increase in redundancy. However, if the third node 3 does not provide an acknowledgement, the second node 2 provides an acknowledgment and forwards the message to the first node 1. In this regard, the third node 3 and the second node 2 must be able to communicate to receive all advantages of the scheme.

Figure 5 shows an exemplary multi-hop wireless network, in which the destination node (e.g., the base station BS) acknowledges the broadcast message sent by the fourth node 4. In particular, the fourth node 4 may be configured to forward a message to the second node 2, which is configured to forward the message to the first node 1, which is configured to forward the message to the base station BS. However, if the fourth node 4 can communicate directly with the base station BS, to reduce delay and energy consumption, the fourth node 4 may broadcast the message to the second node 2 and the base station BS, and wait for an acknowledgement from either the second node 2 or the base station BS. In this regard, a time slot 2 may be allocated to the second node 2 to send an acknowledgement (ack) to the fourth node 4 and a time slot BS may be allocated to the base station BS to send an acknowledgement (ack) to the fourth node 4. Therefore, according to an exemplary embodiment of the present invention, the fourth node 4 broadcasts a message. If the base station BS detects the broadcasted message (error-free) the base station BS provides an acknowledgement (ack) in the time slot BS allocated for the base station BS. If the second node 2 detects the acknowledgement from the base station BS, the second node 2 does not provide an acknowledgment to the fourth node 4. If the fourth node 4 detects the acknowledgment from the base station BS or the second node 2, the fourth node 4 does not try to resend the message. In this regard, the second node 2 is not required to forward the message. Moreover, the first node 1 is also not required to forward the message. Hence, transmit energy at the second node 2 and the first node 1 is saved. Also, since the second node 2 and the first node 1 do not forward the message two hops may be skipped, thereby reducing the delay in sending the message to the destination. Moreover, if the link to the second node 2 or the first node 1 should fail, or even if the second node 2 or the first node 1 should fail, the message may still reach the destination due to an increase in redundancy. However, if the base station BS does not provide an acknowledgement, the second node 2 provides an acknowledgment and forwards the message to the first node 1, which forwards the message to the base station BS. In this regard, the base station BS and the second node 2 must be able to communicate to receive all advantages of the scheme.

This scheme may be used to jump over any number of hops, use any path. The forwarding node need not be closer to the destination, if this is the case one advantage might not be very significant.

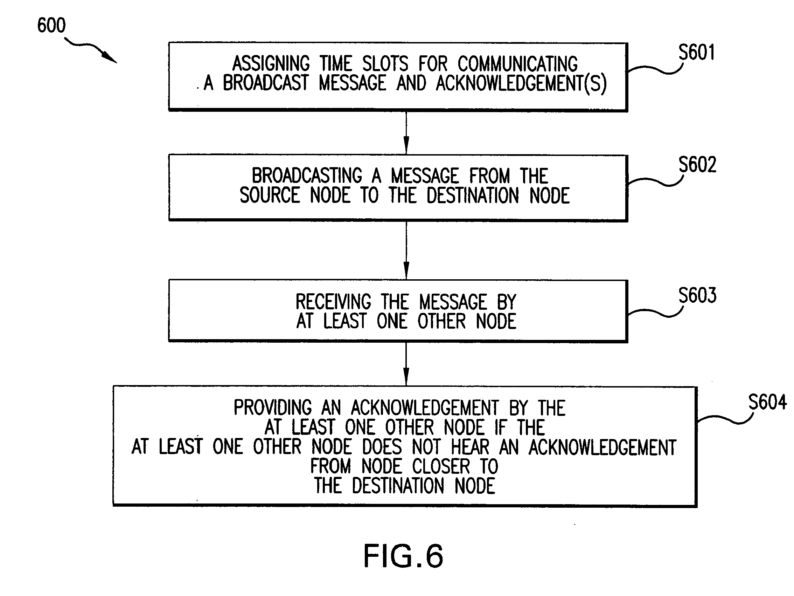

Figure 6 shows an exemplary method 600 to reduce delay and/or conserve energy when sending a message from a source node to a destination node of a multi-hop wireless network. In step S601, times slots are assigned for communicating a broadcast message and acknowledgements to the broadcast message. In particular, a first time slot is assigned for communicating the broadcast message from the source node to the destination node, and subsequent time slots are assigned to the destination node and at least one other node for communication an acknowledgement to the broadcasted message. In this regard, the at least one other node may be, for example, one or more intermediate nodes between the source node and the destination node, and the order of the subsequently assigned time slots may correspond, for example, to a hierarchical relationship of the destination node and the intermediate node(s) with respect to other nodes of the multi-hop wireless network.

In steps S602 and S603, the message is broadcasted by the source node to the destination node, which is received by the intermediate node(s). In this regard, the source node broadcasts the message in the time slot assigned for broadcasting the message.

In step S604, an acknowledgement is provided by the intermediate node(s) if the intermediate node(s) do not hear an acknowledgement from a node closer to the destination node. In this regard, the intermediate node(s) provide the acknowledgement in the appropriately assigned time slot, and more than one intermediate node may participate in the providing of the acknowledgement.

## Claims

1. A method of at least one of reducing delay and conserving energy to send a message from a source node to a destination node of a multi-hop wireless network, comprising:
broadcasting the message by the source node;
receiving the message by at least one other node of the multi-hop wireless network; and
providing an acknowledgment by the at least one other node if the at least one other node does not hear an acknowledgment from a node that is closer to the destination node.

2. The method of claim 1, further comprising:
retransmitting the message by the source node if an acknowledgment is not received.

3. The method of claim 1, wherein the at least one other node includes an intermediate node between the source node and the destination node.

4. The method of claim 1, wherein the at least one other node includes the destination node.

5. The method of claim 1, wherein the at least one other node includes at least two intermediate nodes between the source node and the destination node.

6. The method of claim 5, wherein the at least two intermediate nodes include a first intermediate node and a second intermediate node, the first intermediate node configured to forward the message from the source node to the second intermediate node and the second intermediate node configured to forward the message from the first intermediate node to the destination node.

7. The method of claim 6, wherein the first intermediate node only forwards the message to the second intermediate node if the first intermediate node does not provide an acknowledgement of the message.

8. The method of claim 1, further comprising:
assigning a first time slot for communicating the broadcasted message and subsequent time slots for providing the acknowledgement.

9. The method of claim 8, wherein the subsequent times slots are assigned to the destination node and the at least one other node.

10. The method of claim 9, wherein an order of the subsequent time slots corresponds to a hierarchical relationship of the destination node and the at least one other node with respect to other nodes of the multi-hop wireless network.

11. A method of reducing delay or energy consumption in a multi-hop wireless network, comprising:
broadcasting a message by a source node, the message intended for a destination node; and
forwarding the message by another node only if the another node does not hear an acknowledgment of the broadcasted message from one of the destination node and a node closer to the destination node.

12. The method of claim 11, further comprising:
providing an acknowledgment of the broadcasted message by one of at the destination node and at an intermediate node between the destination node and the source node.

13. The method of claim 12, wherein the acknowledgement is provided in a time slot assigned to one of the destination node and an intermediate node between the destination node and the source node.

14. The method of claim 13, wherein the time slot is arranged according to a hierarchical relationship of the one of the destination node and the intermediate node with respect to other nodes in the multi-hop wireless network.

15. A method of communication between nodes in a wireless network, comprising:
arranging the nodes of the wireless network in a hierarchical manner which corresponds to a primary responsibility of how messages should be forwarded from a source node to a destination node in the wireless network and which nodes should provide acknowledgements to the messages;
assigning time slots to the nodes based on the hierarchical relationship; and
configuring intermediate nodes to participate directly in forwarding the messages and providing the acknowledgements.

16. The method of claim 15, further comprising:
configuring nodes that are relatively closer to the destination node to participate directly in forwarding the messages and providing the acknowledgements.

17. The method of claim 16, wherein the nodes that are relatively closer the destination node participate if a node having primary responsibility fails to one of forward and acknowledge a message.

18. The method of claim 15, further comprising:
configuring the destination node to participate directly in forwarding the messages and providing the acknowledgements.
